# FASCICULE DE BREVET EUROPEEN

(11) **EP 1 774 613 B1**
(45) Date de publication et mention de la délivrance du brevet: **22.09.2010**
(21) Numéro de dépôt: 05788665.7
(22) Date de dépôt: 08.07.2005
(51) Int. Cl.: H01M 10/04

(54) **MICROBATTERIE COMPORTANT DES CONNEXIONS TRAVERSANTES ET PROCEDE DE REALISATION D'UNE TELLE MICROBATTERIE**
MIKROBATTERIE MIT DURCHSTEHENDEN VERBINDUNGEN UND VERFAHREN EINE DERARTIGE MIKROBATTERIE HERZUSTELLEN
MICROBATTERY COMPRISING THROUGH-CONNECTIONS AND PRODUCTION METHOD THEREOF

(30) Priorité: 03.08.2004 FR 0408597
(43) Date de publication de la demande: 18.04.2007
(73) Titulaire: Commissariat à l'Énergie Atomique et aux Énergies Alternatives, 75015 Paris (FR)
(72) Inventeur: LAURENT, Jean-Yves, F-38420 Domene (FR); SALOT, Raphaël, 38250 Lans en Vercors (FR); MARSACQ, Didier, F-38210 MONTAUD (FR); ZUSSY, Marc, F-3812 Saint Egrève (FR)
(74) Mandataire: Hecké, Gérard
(86) Numéro de dépôt international: PCT/FR2005/001771
(87) Numéro de publication internationale: WO 2006/024721

(56) Documents cités:
- WO-A2-2005/036689
- US-A- 5 561 004
- US-A1- 2002 037 756
- US-A1- 2004 081 860
- US-B1- 6 168 884
- US-B1- 6 197 450
- US-B1- 6 632 563

## Description

### Domaine technique de l'Invention

L'invention concerne une microbatterie comportant
- un support ayant une face avant et une face arrière,
- des premier et second collecteurs de courant, disposés sur la face avant du support,
- un empilement comportant une anode et une cathode séparées par un électrolyte, l'anode et la cathode étant en contact respectivement avec les premier et second collecteurs de courant,
- une couche de protection recouvrant ledit empilement,
- des moyens de connexion électrique en contact avec les premier et second collecteurs de courant.

### État de la technique

Comme représenté à la figure 1 et décrit notamment dans le document US-A-2002/0037756, les microbatteries comportent classiquement un support 1 ayant une face avant 2 et une face arrière 3 et sur lequel sont disposés des premier (4) et second (5) collecteurs de courant et un empilement comportant une anode 6 et une cathode 8 séparées par un électrolyte 7. L'anode 6 et la cathode 8 sont en contact respectivement avec les premier 4 et second 5 collecteurs de courant. Les collecteurs de courant 4 et 5 comportent habituellement des plots de contact permettant de connecter une charge électrique externe aux premier et second collecteurs 4 et 5 de courant et, ainsi, à l'anode 6 et à la cathode 7 de la microbatterie. Les plots de contact sont disposés typiquement sur le support 1, de part et d'autre dudit empilement, et sont, par exemple, constitués par les prolongements des collecteurs de courant 4 et 5. Des fils de contact sont soudés sur les plots de contact pour connecter la charge électrique externe. L'épaisseur de l'empilement peut-être inférieur à 50 micromètres.

L'énergie stockée dans la batterie dépend essentiellement de la surface des électrodes, c'est-à-dire de l'anode 6 et de la cathode 8. Ainsi, la réduction de la taille des batteries impose l'emploi de couches très minces pour réaliser les électrodes et l'électrolyte. Par ailleurs, lorsque la microbatterie est montée sur la puce d'un circuit intégré, la surface disponible est souvent très limitée.

Plusieurs microbatteries peuvent être associées électriquement en série ou en parallèle. Afin de minimiser la taille d'un dispositif comportant une pluralité de batteries, on cherche alors à minimiser la taille des plots de contacts.

Classiquement, la fabrication des batteries comporte des procédés d'enduction de couches actives successives constituant l'anode, l'électrolyte et la cathode. L'anode, la cathode et l'électrolyte étant constitués par des matériaux très réactifs, la batterie entière est habituellement recouverta par une couche de protection ou d'enrobage. Seuls les plots de contact ne doivent pas être recouverts, ce qui est difficile à réaliser, surtout sur un dispositif achevé.

### Objet de l'invention

L'invention a pour but de remédier à ces inconvénients et, en particulier, de minimiser la taille d'une microbatterie et d'éviter une étape d'ouverture focalisée des contacts en phase finale de fabrication.

Selon l'invention, ce but est atteint par les revendications annexées et, plus particulièrement, par le fait que les moyens de connexion électrique comportent des connexions tronconiques traversant le support de sa face avant à sa face arrière.

L'invention a également pour but un procédé de réalisation d'une microbatterie selon l'invention comportant successivement :
- la gravure, dans la face avant du support, de cavités ayant une profondeur inférieure à l'épaisseur du support,
- le comblement des cavités avec un matériau conducteur destiné à constituer les connexions traversant le support,
- le dépôt successif, sur la face avant du support, des premier et second collecteurs de courant, de l'empilement et de la couche de protection,
- le retrait d'une épaisseur de la face arrière du support, de manière à découvrir le matériau conducteur contenu dans les cavités.

### Description sommaire des dessins

D'autres avantages et caractéristiques ressortiront plus clairement de la description qui va suivre de modes particuliers de réalisation de l'invention données à titre d'exemples non limitatifs et représentés aux dessins annexés, dans lesquels :
La figure 1 représente une microbatterie selon l'art antérieur.
La figure 2 représente un mode de réalisation particulier d'une microbatterie selon l'invention.
Les figures 3 à 6 représentent différentes étapes d'un mode de réalisation particulier d'un procédé de fabrication d'une micro batterie selon l'Invention.

### Description de modes particuliers de réalisation

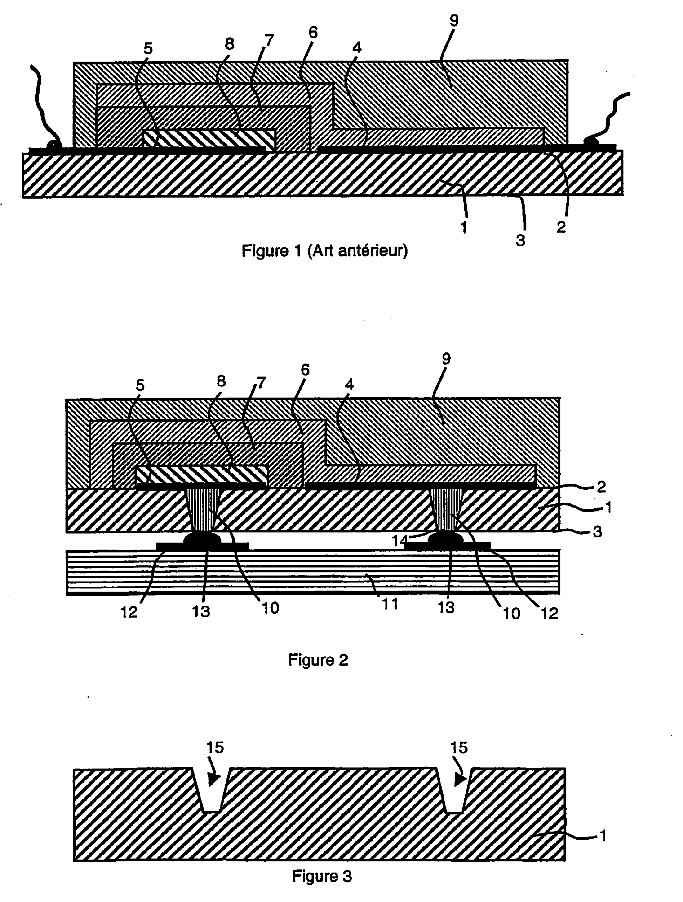

La microbatterie représentée à la figure 2 comporte un support 1, de préférence en silicium, ayant une face avant 2 et une face arrière 3. Le support en silicium présente l'avantage d'être compatible avec les procédés de dépôt issus des techniques de la microélectronique. Sur la face avant 2 du support 1 sont disposés des premier (4) et second (5) collecteurs de courant. Un empilement comportant une cathode 8 et une anode 6 séparées par un électrolyte 7 est disposé sur les collecteurs de courant 4 et 5. L'anode 6 et la cathode 8 sont respectivement en contact avec les premier 4 et second 5 collecteurs de courant. Une couche de protection 9 recouvre ledit empilement et assure, ainsi, l'étanchéité de la microbatterie. Les premier (4) et second (5) collecteurs de courant sont en contact avec des connexions 10 traversant le support 1 de sa face avant 2 à sa face arrière 3.

Dans le mode de réalisation particulier représenté à la figure 2, l'empilement recouvre sensiblement la totalité de la face avant 2 du support 1. Ainsi, la totalité de la face avant 2 du support 1 est utilisée uniquement pour l'empilement de la microbatterie, sans pertes de surface pour d'éventuels plots de contact. Sur la figure 2, la microbatterie est disposée sur une charge électrique 11, par exemple un circuit intégré, comportant des plots de contact 12. Des faces arrière 14 des connexions 10 traversantes sont reliées, par exemple par l'intermédiaire de microbilles fusibles 13, aux plots de contacts 12 de la charge électrique 11. Ainsi, les faces arrière 14 des connexions 10 traversantes remplissent, sur la face arrière 3 du support 1, la fonction de bornes de connexion arrière de la microbatterle. Les bornes de contact permettent de relier la microbatterle à une ou plusieurs microbatteries supplémentaires, à une puce électronique ou à une charge électrique quelconque. Des batteries peuvent, par exemple, être connectées directement entre elles, face arrière contre face arrière, en série ou en parallèle. II peut également être envisagé de déposer des plots de contact sur les faces arrière 14 des connexions 10 traversantes. L'épaisseur totale de la microbatterie, l'empilement et le support 1 compris, peut être de l'ordre de 0,1mm.

Les figures 3 à 6 représentent des étapes successives d'un procédé particulier de réalisation d'une micro batterie selon l'invention, Comme représenté à la figure 3, des cavités 15 ayant une profondeur Inférieure à l'épaisseur du support 1 sont gravées dans la face avant 2 du support 1, de manière à constituer des orifices non-débouchants. La gravure peut se faire par un procédé de gravure chimique ou par un procédé plasma réactif. La profondeur d'une cavité 15 est, par exemple, de 50 micromètres et l'épaisseur du support 1 est de 100 micromètres. Sur la figure 3, les cavités 15 rétrécissent en direction de la face arrière du support 1. Par contre, la demande de brevet européen EP1673834, publiée le 28/07/06 et revendiquant une priorité du 06/10/03, décrit une microbatterie dont les contacts sont reliés à des connexions traversantes cylindriques.

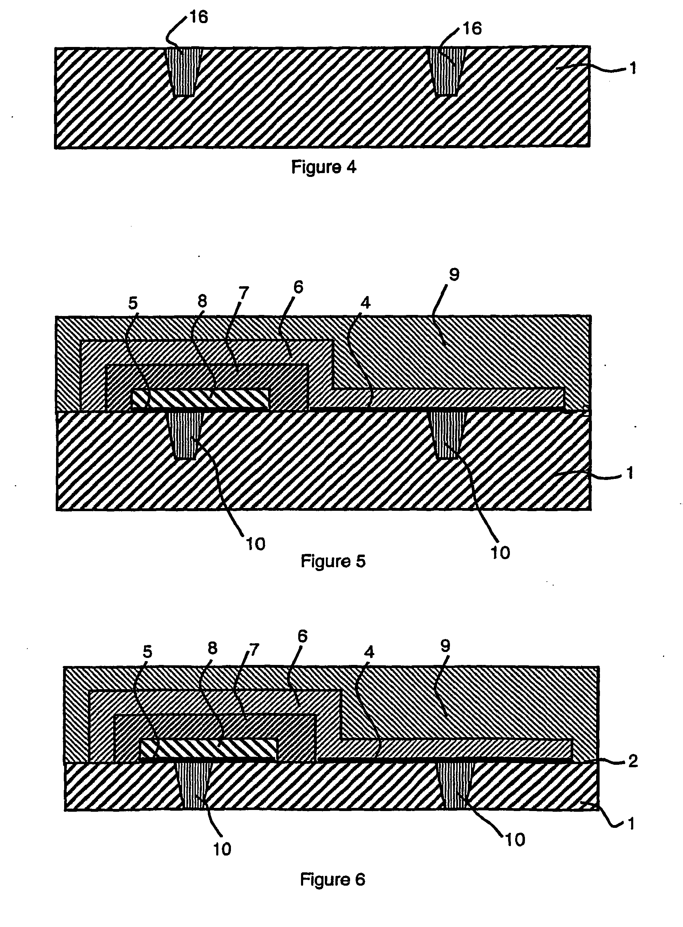

Comme représenté à la figure 4, les cavités 15 sont ensuite comblées avec un matériau conducteur 16 destiné à constituer les connexions 10 traversant le support 1. Le comblement des cavités 15 avec le matériau conducteur 16 est effectué, de préférence, par croissance électrolytique, par exemple de cuivre. Dans le mode de réalisation particulier représenté à la figure 4, la face avant 2 du support 1 et le matériau conducteur 16 forment une surface plane commune. Pour obtenir une telle surface plane commune, une étape supplémentaire de planarisation peut être effectuée, en particulier lorsque, après comblement des cavités 15, le matériau conducteur 16 dépasse de la face avant du support 1.

Sur la figure 5 est représenté le dépôt successif, sur la face avant 2 du support 1, des premier 4 et second 5 collecteurs de courant, de l'empilement et de la couche de protection 9. Les collecteurs de courant et l'empilement de la microbatterie sont alors construits sur le matériau conducteur 16 destiné à constituer les connexions traversant le support 1, ultérieurement. Ainsi, le matériau conducteur 16 est provisoirement renfermé dans les cavités 15, entre le matériau du support 1 et les collecteurs de courant 4 et 5, pour être découvert en fin de procédé.

L'anode 6 est, par exemple, réalisée par évaporation thermique de lithium et elle a, de préférence, une épaisseur comprise entre 3 et 5 micromètres. L'électrolyte 7 peut comporter un composé lithié tel que de l'oxynitrure de lithium et de phosphore, plus connu sous le nom de LiPON. l'électrolyte 7 a, de préférence, une épaisseur comprise entre 1 et 2 micromètres. Les collecteurs de courants 4 et 5 ont, par exemple, une épaisseur comprise entre 0,2 et 0,5 micromètres. L'empilement ainsi que les collecteurs de courant 4 et 5 peuvent également être réalisés par un procédé de dépôt physique en phase vapeur (PVD ou "Physical Vapor Oeposition") ou par vaporisation à basse température.

Ensuite, comme représenté à la figure 6, une épaisseur de la face arrière 3 du support 1 est retirée, de manière à découvrir le matériau conducteur 16 contenu dans les cavités 15. Ainsi, le support est aminci, par exemple en enlevant une épaisseur de 50 micromètres, et les bornes de connexion de la microbatterie sont libérées en les faisant apparaître au dos de la batterie. Le retrait de ladite épaisseur de la face arrière 3 du support 1 est, de préférence, effectué par polissage mécano-chimique.

L'invention n'est pas limitée au mode particulier de réalisation décrit ci-dessus. En particulier, le support 1 peut être en verre, en céramique (zircone, alumine) ou en polymère (polyéther-éther-cétone PEEK; polyimlde).

## Revendications

1. Microbatterie comportant
- un support (1) ayant une face avant (2) et une face arrière (3),
- des premier (4) et second (5) collecteurs de courant, disposés sur la face avant (2) du support (1),
- un empilement comportant une anode (6) et une cathode (8) séparées par un électrolyte (7), l'anode (6) et la cathode (8) étant en contact respectivement avec les premier (4) et second (5) collecteurs de courant,
- une couche de protection (9) recouvrant ledit empilement,
- des moyens de connexion électrique en contact avec les premier (4) et second (5) collecteurs de courant,
microbatterie **caractérisée en ce que** les moyens de connexion électrique comportent des connexions (10) traversant le support. (1) de sa face avant (2) à sa face arrière (3) en se rétrécissant.

2. Microbatterie selon la revendication 1, **caractérisée en ce qu'**elle comporte des bornes de connexion disposées sur la face arrière (3) du support (1).

3. Microbatterie selon l'une des revendications 1 et 2, **caractérisée en ce que** l'empilement recouvre sensiblement la totalité de la face avant (2) du support (1).

4. Microbatterie selon l'une quelconque des revendications 1 à 3, **caractérisée en ce que** le support (1) est en silicium, en verre, en céramique ou en polymère.

5. Microbatterie selon l'une quelconque des revendications 1 à 4, **caractérisée en ce qu'**elle présente une épaisseur totale de l'ordre de 0,1 mm.

6. Procédé de réalisation d'une microbatterie selon l'une quelconque des revendications 1 à 5, **caractérisé en ce qu'**il comporte successivement
- la gravure, dans la face avant (2) du support (1), de cavités (15) ayant une profondeur inférieure à l'épaisseur du support (1),
- le comblement des cavités (15) avec un matériau conducteur (16) destiné à constituer les connexions (10) traversant le support (1),
- le dépôt successif, sur la face avant (2) du support (1), des premier (4) et second (5) collecteurs de courant, de l'empilement et de la couche de protection (9),
- le retrait d'une épaisseur de la face arrière (3) du support (1), de manière à découvrir le matériau conducteur (16) contenu dans les cavités (15).

7. Procédé selon la revendication 6, **caractérisé en ce que** la gravure se fait par un procédé chimique ou par un procédé plasma réactif.

8. Procédé selon l'une des revendications 6 et 7, **caractérisé en ce que** le comblement des cavités (15) avec un matériau conducteur (16) est effectué par croissance électrolytique.

9. Procédé selon l'une quelconque des revendications 6 à 8, **caractérisé en ce que** le retrait de ladite épaisseur de la face arrière (3) du support (1) est effectué par polissage mécano-chimique.

## Claims

1. Microbattery comprising
- a support (1) having a front face (2) and a rear face (3),
- first (4) and second (5) current collectors, arranged on the front face (2) of the support (1),
- a stack comprising an anode (6) and a cathode (8) separated by an electrolyte (7), the anode (6) and cathode (8) being in contact respectively with the first (4) and second (5) current collectors,
- a protective layer (9) covering said stack,
- electrical connection means in contact with the first (4) and second (5) current collectors,
microbattery **characterized in that** the electrical connection means comprise connections (10) that narrow as they pass through the support (1) from the front face (2) to the rear face (3) thereof.

2. Microbattery according to claim 1, **characterized in that** it comprises connection terminals arranged on the rear face (3) of the support (1).

3. Microbattery according to one of claims 1 and 2, **characterized in that** the stack covers substantially the whole of the front face (2) of the support (1).

4. Microbattery according to any one of claims 1 tao 3, **characterized in that** the support (1) is made from silicon, glass, ceramic or polymer.

5. Microbattery according to any one of claims 1 tao 4, **characterized in that** it presents a total thickness of about 0.1mm.

6. Method for producing a microbattery according to any one of claims 1 to 5, **characterized in that** it successively comprises
- etching, in the front face (2) of the support (1), of cavities (15) having a depth that is smaller than the thickness of the support (1),
- filling of the cavities (15) with a conducting material (16) designed to constitute the connections (10) passing through the support (1),
- successive deposition, on the front face (2) of the support (1), of the first (4) and second (5) current collectors, of the stack and of the protective layer (9),
- removal of a layer of the rear face (3) of the support (1) so as to uncover the conducting material (16) contained in the cavities (15).

7. Method according to claim 6, **characterized in that** etching is performed by a chemical method or by a reactive plasma method.

8. Method according to one of claims 6 and 7, **characterized in that** filling of the cavities (15) with a conducting material (16) is performed by electrolytic growth.

9. Method according to any one of claims 6 to 8, **characterized in that** removal of said layer of the rear face (3) of the support (1) is achieved by chemical-mechanical polishing.

## Patentansprüche

1. Mikrobatterie, die umfasst:
- ein Substrat (1) mit einer Vorderseite (2) und einer Rückseite (3),
- einen ersten (4) und einen zweiten (5) Stromkollektor, die auf der Vorderseite (2) des Substrats (1) angeordnet sind,
- eine Aufschichtung aus einer Anode (6) und einer Kathode (8), die durch einen Elektrolyten (7) getrennt sind, wobei die Anode (6) und die Kathode (8) jeweils mit dem ersten (4) und dem zweiten (5) Stromkollektor Kontakt haben,
- eine Schutzschicht (9), welche diese Aufschichtung bedeckt,
- Mittel zur elektrischen Verbindung, die Kontakt mit dem ersten (4) und zweiten (5) Stromkollektor haben,
Mikrobatterie, die **dadurch gekennzeichnet ist, dass** die Mittel zur elektrischen Verbindung Verbindungen (10) umfassen, die sich verengen wenn sie durch das Substrat (1) von dessen Vorderseite (2) zu dessen Rückseite (3) hindurchgeführt sind.

2. Mikrobatterie nach Anspruch 1, **dadurch gekennzeichnet, dass** sie Anschlussklemmen umfasst, die auf der Rückseite (3) des Substrats (1) angeordnet sind.

3. Mikrobatterie nach einem der Ansprüche 1 und 2, **dadurch gekennzeichnet, dass** die Aufschichtung im Wesentlichen die ganze Vorderseite (2) des Substrats (1) bedeckt.

4. Mikrobatterie nach einem der Ansprüche 1 bis 3, **dadurch gekennzeichnet, dass** das Substrat (1) aus Silizium, Glas, Keramik oder einem Polymer besteht.

5. Mikrobatterie nach einem der Ansprüche 1 bis 4, **dadurch gekennzeichnet, dass** sie eine Gesamtdicke von etwa 0,1 mm aufweist.

6. Verfahren zur Herstellung einer Mikrobatterie nach einem der Ansprüche 1 bis 5, **dadurch gekennzeichnet, dass** es nacheinander umfasst:
- Ätzen von Vertiefungen (15) in die Vorderseite (2) des Substrats (1), deren Tiefe unter der Dicke des Substrats (1) liegt,
- Füllen der Vertiefungen (15) mit einem leitenden Material (16), das die Verbindungen (10) bilden soll, die durch das Substrat (1) hindurchführen,
- das aufeinander folgende Aufbringen eines ersten (4) und eines zweiten (5) Stromkollektors, der Aufschichtung und der Schutzschicht (9) auf der Vorderseite (2) des Substrats (1),
- das Wegnehmen einer Dicke der Rückseite (3) des Substrats (1), sodass das in den Vertiefungen (15) befindliche leitende Material (16) freigelegt wird.

7. Verfahren nach Anspruch 6, **dadurch gekennzeichnet, dass** das Ätzen mittels eines chemischen oder eines Verfahrens mit reaktivem Plasma stattfindet.

8. Verfahren nach einem der Ansprüche 6 und 7, **dadurch gekennzeichnet, dass** das Füllen der Vertiefungen (15) mit einem leitenden Material (16) durch elektrolytisches Wachstum erfolgt.

9. Verfahren nach einem der Ansprüche 6 bis 8, **dadurch gekennzeichnet, dass** das Wegnehmen der genannten Dicke von der Rückseite (3) des Substrats (1) mittels chemisch-mechanischem Polieren erfolgt.
